# EUROPÄISCHE PATENTSCHRIFT

(11) **EP 3 064 907 B1**
(45) Veröffentlichungstag und Bekanntmachung des Hinweises auf die Patenterteilung: **30.03.2022**
(21) Anmeldenummer: 16157362.1
(22) Anmeldetag: 25.02.2016
(51) Int. Cl.: G01F 23/18, E03F 7/04, G01L 19/06

(54) **RÜCKSTAUVERSCHLUSS MIT EINER EINRICHTUNG ZUM MESSEN EINES WASSERSTANDSNIVEAUS**
BACKWATER CONTROL VALVE WITH A DEVICE FOR MEASURING A WATER LEVEL
VANNE ANTI RETOUR AVEC UN DISPOSITIF DE MESURE D'UN NIVEAU D'EAU

(30) Priorität: 25.02.2015 DE 102015102714
(43) Veröffentlichungstag der Anmeldung: 07.09.2016
(73) Patentinhaber: ACO Ahlmann SE & Co. KG, 24782 Büdelsdorf (DE)
(72) Erfinder: Winkler, Marcel, 72202 Nagold (DE)
(74) Vertreter: Bohnenberger, Johannes

(56) Entgegenhaltungen:
- EP-A2- 2 639 369
- DE-A1- 2 348 225
- JP-A- H10 111 163
- JP-A- H11 153 469
- JP-A- 2002 156 267
- US-A1- 2014 037 464

## Beschreibung

Die Erfindung betrifft einen Rückstauverschluss mit einer Einrichtung zum Messen eines Wasserstandsniveaus einer Abwasseranlage nach dem Oberbegriff des Patentanspruches 1.

Bei einem (einfachen) Rückstauverschluss müssen im Betrieb verschiedene Füllstände festgestellt werden, beispielsweise, ob Abwasser aus dem Kanalnetz in die Abwasseranlage zurückdrückt. Um dies festzustellen, sind verschiedene Verfahren üblich, nämlich pneumatische Verfahren, bei denen der Druck gemessen wird, optische Verfahren, die Messung durch eine Benetzung eines Sensors, oder mechanische Verfahren durch Schwimmer.

Optische Verfahren oder die Messung von Benetzung sind insofern nachteilig, als erhebliche Störungsempfindlichkeiten festzustellen sind.

Der Wasserstand kann durch mechanische Schwimmer festgestellt werden, jedoch sind diese insofern störungsanfällig, als Schmutz, insbesondere langfaserige Stoffe, die Beweglichkeit einschränken und damit Störungen verursachen können.

Pneumatische Verfahren, also solche, bei denen der Druck in der interessierenden Zone gemessen wird, sind relativ störungsunempfindlich. Bei diesen Verfahren wird ein Relativdruck-Sensor verwendet, der die Druckdifferenz zwischen einem aktuell vorhandenen Umgebungsdruck und dem Druck an der interessierenden Stelle misst. Ein Rückstaualarm oder der Einschaltpunkt einer Pumpe wird ab einer definierten Füllhöhe ab Oberkante eines Auslaufstutzens abgegeben, wobei der Relativdruck auf unter 10 mbar liegen kann. Normalerweise werden Druckunterschiede zwischen 30 und 50 mbar abgefragt. Eine solche Relativdruckmessung ist notwendig, da der hier gemessene Rückstaudruck schon aufgrund einer aktuellen Wetterlage bis zu +/- 30 mbar schwanken kann. Der Druckunterschied zwischen Meereshöhe und einem Aufstellort von 2000 m liegt bei 200 mbar, so dass also eine solche Relativdruckmessung unbedingt notwendig ist, somit also eine "Belüftung" des Drucksensors notwendig ist.

Üblicherweise wird der Drucksensor im Gehäuse eines Steuergerätes angebracht, in welchem auch die elektrischen Komponenten zur Steuerung des Rückstauverschlusses montiert sind. Problematisch hierbei ist die Tatsache, dass eine druckdichte Verbindung über einen Druckschlauch zwischen dem Rückstauverschluss und dem Sensor im Steuergerätesensor vorgesehen werden muss. Dieser Druckschlauch muss stetig steigend verlegt werden, darf also keine Schlaufen oder Wellen im Verlauf aufweisen. Durch Ansammlung von Kondenswasser kann es sonst zu Fehlern oder gar Unterbrechungen der Messung kommen.

JP H10 111163 A offenbart einen Drucksensor zum Messen eines Wasserstandsniveaus, der in eine Flüssigkeit abgesenkt wird. Solche Sensoren sind in Rückstauverschlüssen unerwünscht, da sie zur Verbindung mit einer Steuerung eine elektrische Leitung benötigen, die aus dem Rückstauverschluss herausgeführt werden muss. Um Leckagen an der Durchtrittstelle der elektrischen Leitung dauerhaft zu vermeiden, muss diese daher aufwändig abgedichtet werden.

EP 2 639 369 A2 beschreibt einen Rückstauverschluss mit einer Einrichtung zum Messen eines Wasserstandsniveaus im Rückstauverschluss. Die Messeinrichtung umfasst einen Drucksensor, mit dem ein Relativdruck zwischen dem Abwasser im Rückstauverschluss und einem Umgebungsdruck gemessen wird. Dazu weist die Messeinrichtung eine mit dem Abwasserdruck druckdicht verbundene Kammer auf.

Der Erfindung liegt die Aufgabe zu Grunde, einen Rückstauverschluss der eingangs genannten Art dahingehend weiterzubilden, dass in einfacher Weise eine sichere Druckmessung zur Feststellung/Verhinderung eines Rückstaus erfolgen kann.

Diese Aufgabe wird durch einen Rückstauverschluss nach Patentanspruch 1 gelöst.

Erfindungsgemäß wird diese Aufgabe durch einen Rückstauverschluss mit einer Einrichtung zum Messen eines Wasserstandsniveaus des Rückstauverschlusses gelöst, wobei die Einrichtung zum Messen des Wasserstandsniveaus einen Drucksensor umfasst, der zum Messen eines Relativdruckes von Wasser in dem Rückstauverschluss bezogen auf einen Umgebungsdruck ausgebildet ist und eine erste, mit dem Abwasser druckdicht verbundene und eine zweite mit der Umgebungsluft druckdicht verbundene Kammer aufweist, zwischen denen ein Differenzdruck gemessen wird, wobei der Drucksensor direkt an einem abnehmbaren Deckel des Rückstauverschlusses angebracht und eine mit der zweiten Kammer druckdicht verbundene Fluidleitung vorgesehen ist, deren zur Umgebung offenes Ende in einem gegenüber dem Rückstauverschluss auf einer beliebigen Höhe angeordneten Befestigungsgehäuse angebracht ist.

Dadurch, dass sozusagen der Umgebungsdruck über die Fluidleitung dem Drucksensor zur Verfügung gestellt und der Drucksensor direkt an dem Rückstauverschluss montiert wird, kann eine beliebige Verlegung der Leitung zwischen Rückstauverschluss und Befestigungsgehäuse vorgenommen werden. Störungen können hier nicht auftreten. Vorteilhafterweise kann das Befestigungsgehäuse nun auf einer beliebigen Höhe in Bezug auf den Rückstauverschluss angeordnet werden und muss nicht mehr erhöht in Bezug auf den Rückstauverschluss angeordnet werden, da die Fluidleitung erfindungsgemäß druckdicht ist. Hierdurch wird die Installation der Einrichtung vereinfacht und die Betriebssicherheit verbessert.

Vorzugsweise ist im Befestigungsgehäuse für das offene Ende der Fluidleitung die Steuereinrichtung zum Steuern des Rückstauverschlusses angebracht. Dadurch ergibt sich ein kompakter Aufbau.

Die Fluidleitung ist vorzugsweise zur Verlegung zusammen mit elektrischen Mess- und/oder Steuerleitungen ausgebildet, so dass eine einfache Montage sichergestellt ist.

Die Fluidleitung ist vorzugsweise mit einem Außenmantel umhüllt, in welchem die Mess- und/oder Steuerleitungen angebracht sind, was eine besonders kompakte Bauart ergibt.

In beiden vorgenannten Fällen ist es von Vorteil, wenn eine Steckverbindung vorgesehen ist, über welche die Fluidleitung zusammen mit den Mess- und/oder Versorgungsleitungen mit dem Drucksensor und elektrischen Einrichtungen des Drucksensors und dem Rückstauverschluss sowie der Steuerung verbindbar sind. Dies erleichtert die Montage.

Die Steckverbindung umfasst vorzugsweise eine Steckbuchse, die direkt an dem Rückstauverschluss und der Steuerung angebracht ist. Vorzugsweise ist hierbei die Steckbuchse an einem abnehmbaren Deckel des Rückstauverschlusses angebracht, was die Montage ebenfalls erleichtert.

Um die Montage weiter zu vereinfachen kann eine Verbindung, insbesondere eine Steckverbindung vorgesehen sein, über welche die Fluidleitung und die Mess- und/oder Versorgungsleitung mit dem Drucksensor und elektrischen Einrichtungen des Drucksensors und der Befestigungsgehäuse verbindbar sind. Neben einer Steckverbindung sind weitere Verbindungsarten denkbar, z.B. Bajonettstecker, Klemmverbindung, Selbstsichernde Verbindungen, Crimpverbindungen, Verschraubte Verbindung z.B. Überwurfverbindungen, fest. Durch die Verwendung der oben aufgeführten Verbindungen kann eine einfache Verlängerung der Fluidleitung erreicht werden, indem entsprechende Verlängerungsleitungsstücke mit den jeweiligen Verbindungsstellen verbunden werden.

Denkbar sind ebenfalls Lötverbindungen oder Steckklemmen. Durch diese Verbindungsarten kann dauerhafte Verbindung zwischen Fluidleitung und Mess- und/oder Versorgungsleitung und/oder mit dem Drucksensor und elektrischen Einrichtungen des Drucksensors und der Befestigungsgehäuse erzielt werden.

Nachfolgend wird eine bevorzugte Ausführungsform der Erfindung anhand von Abbildungen näher erläutert. Hierbei zeigen
- Fig. 1: eine schematisierte Darstellung eines Bauwerkes mit dort vorgesehener Abwasseranlage,
- Fig. 2: eine Schnittdarstellung durch einen Rückstauverschluss zur Erläuterung der für die Steuerung maßgeblichen Niveaus, und
- Fig. 3: eine schematisierte Darstellung eines Drucksensors zusammen mit einem Querschnitt durch eine hier verwendete Leitung.

In der nachfolgenden Beschreibung werden für gleiche und gleich wirkende Teile dieselben Bezugsziffern verwendet.

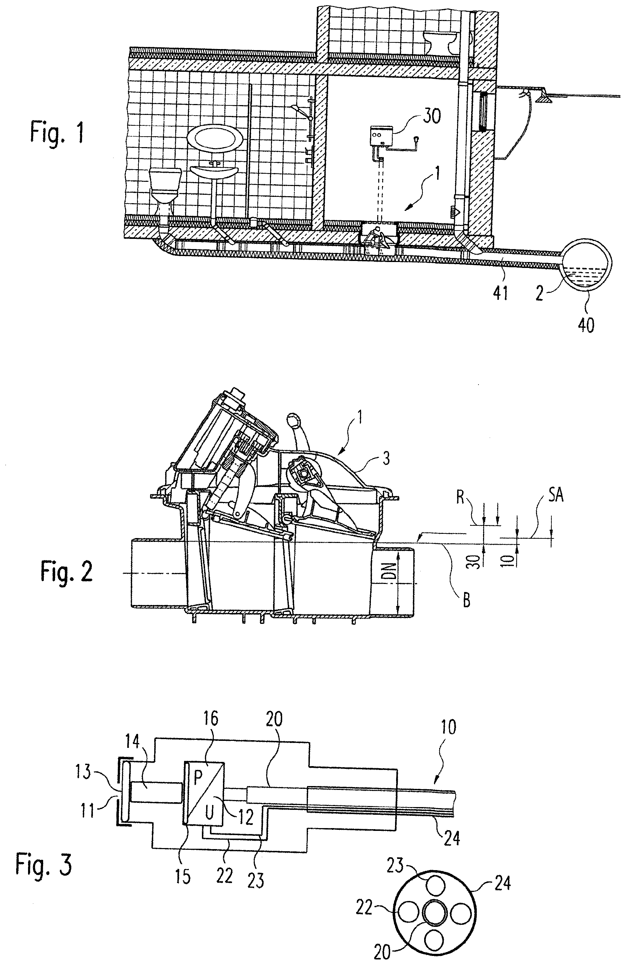

Wie in Fig. 1 gezeigt, sind Abwässer liefernde Einrichtungen, wie Toiletten, Waschbecken oder Bodenabflüsse mit einem Kanal 40 über eine Verbindungsleitung 41 zu verbinden. Wenn diese Bauteile so, wie in Fig. 1 gezeigt, unterhalb des Bodenniveaus liegen, kann es passieren, dass bei Hochwasser der Spiegel des Wassers 2 im Kanal 40 ansteigt und zwar bis maximal zur Höhe des das Bauwerk umgebenden Bodens. Damit das Wasser 2 aus dem Kanal 40 nicht in die Kellerräume des Bauwerks eindringen kann, wird eine Abwasseranlage 1 vorgesehen. In Fig. 1 ist diese erfindungsgemäß als Rückstauverschluss ausgebildet. Dann, wenn der Kanal 40 höher liegt, wird als Abwasseranlage 1 eine Hebeanlage zur Förderung des Abwassers in den Kanal eingesetzt. Dies alles ist dem Fachmann an sich bekannt.

Nachfolgend wird die Erfindung anhand eines in Fig. 2 schematisiert dargestellten Rückstauverschlusses gezeigt, der die Abwasseranlage 1 bildet.

In Fig. 2 ist mit B eine Bezugsebene bezeichnet, welche im Wesentlichen im Bereich der Oberkante der Verbindungsleitung 41 (vor dem Rückstauverschluss) liegt. Übersteigt der Wasserpegel dieses Niveau und erreicht er einen Rückstau-Schaltpunkt R, der im Allgemeinen um ca. 30 - 50 mm höher als die Bezugsebene liegt, so wird die Rückstauklappe geschlossen. Fällt der Wasserstand wieder bis auf einen etwa 10 mm über der Bezugsebene liegenden Rückstauende-Schaltpunkt SA, so wird die Rückstauklappe wieder geöffnet, da keine Gefahr der Überflutung mehr besteht.

Die Bezugsebene B kann durch das Anbringen eines beliebig verstellbaren Staurohrs zwischen Deckel und Drucksensor des Rückstauverschlusses weiter in Richtung Rohrsohle verstellt werden. Eine Staudruckmessung wäre dann schon vor Vollfüllung der Rohrleitung möglich. Das Staurohr würde in den Innenraum des Rückstauverschlusses hineinragen.

Zur Messung des (Ab-) Wassers ist erfindungsgemäß an einem abnehmbaren Deckel 3 des Rückstauverschlusses 1 ein Drucksensor 10 (siehe Fig. 3) angebracht. Der Drucksensor 10 weist eine erste Kammer 11 auf, welche durch die Umgebung des Drucksensors 10 gebildet wird und im vorliegenden Fall dem mit Abwasser füllbaren Innenraum der Abwasseranlage 1 entspricht. Das Innere des Drucksensors 10 ist durch eine Schutzmembran 13 gegenüber der Außenseite abgedichtet, die über einen Stempel 14 auf eine Messmembran 15 eines entsprechenden Wandlers 16 drückt. Der Innenraum des Wandlers 16 bildet eine zweite Kammer 12, so dass eine Druckdifferenz zwischen der ersten Kammer 11 (dem Abwasser) und dem Innenraum 12 gemessen werden kann.

Messsignale (P) werden im Wandler 16 in elektronische Signale (Spannungsausgang/ Stromausgang) gewandelt und werden über eine Messleitung 22 einem Befestigungsgehäuse 30 (siehe Fig. 1) zugeleitet, welcher eine hier nicht gezeigte, aber allgemein bekannte Steuerung beinhaltet.

Vorzugsweise ist die Leitung, welche die Fluidleitung, die Messleitung und die Versorgungsleitung (U= Spannung) 23 innerhalb des Außenmantels 24 umfasst, über eine hier nicht näher dargestellte Steckverbindung auftrennbar, wobei die Steckbuchse an der dem Befestigungsgehäuse 30 montiert ist. Diese Steckverbindung umfasst also sowohl elektrische Kontakte als auch eine fluiddichte Verbindung des Lumens der Fluidleitung 20. Die Steckverbindung ist zeitweise überflutbar (IP 67) ausgebildet.

Der Innenraum des Wandlers 16 bzw. die zweite Kammer 12 ist über einen kurzen Ausgangsstutzen mit einer Fluidleitung 20 verbunden, die zusammen mit der Messleitung 22 von einem Außenmantel 24 umhüllt ist. Innerhalb des Außenmantels 24 sind auch Versorgungsleitungen 23 vorgesehen, über welche die Abwasseranlage 1 schließlich gesteuert, im vorliegenden Fall also die Rückstauklappe motorisch geschlossen werden kann.

Vorzugsweise ist die Leitung, welche die Fluidleitung, die Messleitung und die Steuerleitung/Versorgungsleitung innerhalb des Außenmantels 24 umfasst, über eine hier nicht näher dargestellte Steckverbindung auftrennbar, wobei die Steckbuchse an der Abwasseranlage 1 montiert ist. Diese Steckverbindung umfasst also sowohl elektrische Kontakte als auch eine fluiddichte Verbindung des Lumens der Fluidleitung 20. Der Drucksensor 10 ist ebenso wie die Steckverbindung wasserdicht (IP 68) ausgebildet.

Dadurch, dass das Lumen der Fluidleitung 20 im Befestigungsgehäuse 30 montiert ist, welches ohnehin immer in einem insbesondere vor Wasser geschützten Ort montiert werden muss, kann kein Wasser in die Fluidleitung 20 bzw. in die zweite Kammer 12 eindringen. Auf eine geradlinige (stetig aufsteigende) Verbindung zwischen dem Drucksensor 10 und dem Befestigungsgehäuse 30 muss nicht geachtet werden, da das Lumen der Fluidleitung immer flüssigkeitsfrei bleibt.

### Bezuaszeichenliste

- 1: Abwasseranlage
- 2: Wasser
- 4: Deckel
- 10: Drucksensor
- 11: Erste Kammer
- 12: Zweite Kammer
- 13: Schutzmembran
- 14: Stempel
- 15: Messmembran
- 16: Wandler
- 20: Fluidleitung
- 22: Messleitung
- 23: Versorgungsleitung
- 24: Außenmantel
- 30: Befestigungsgehäuse
- 40: Kanal
- 41: Verbindungsleitung
- B: Bezugsebene
- R: Rückstau-Schaltpunkt
- SA: Rückstauende-Schaltpunkt
- P: Messsignale (Prozessdruck)
- U: Versorgungsspannung Sensor

## Patentansprüche

1. Rückstauverschluss mit einer Einrichtung zum Messen eines
Wasserstandsniveaus des Rückstauverschlusses, wobei die Einrichtung eine Fluidleitung (20), ein Befestigungsgehäuse (30) und einen Drucksensor (10) aufweist, der zum Messen eines Relativdruckes von Wasser (2) im Rückstauverschluss bezogen auf einen Umgebungsdruck ausgebildet ist und eine erste (11) mit dem Abwasserdruck druckdicht verbundene und eine zweite (12) mit der Umgebungsluft druckdicht verbundene Kammer aufweist, zwischen denen ein Differenzdruck gemessen wird,
wobei der Drucksensor (10) direkt an einem abnehmbaren Deckel (3) des Rückstauverschlusses angebracht und die Fluidleitung (20) mit der zweiten Kammer (12) druckdicht verbunden ist, wobei ein zur Umgebung offenes Ende der Fluidleitung (20) in einem gegenüber dem Rückstauverschluss auf einer beliebigen Höhe angebrachten Befestigungsgehäuse (30) angebracht ist.

2. Rückstauverschluss nach Anspruch 1,
**dadurch gekennzeichnet, dass**
im Befestigungsgehäuse (30) eine Steuereinrichtung zum Steuern des Rückstauverschlusses angebracht ist.

3. Rückstauverschluss nach einem der vorherigen Ansprüche,
**dadurch gekennzeichnet, dass**
die Fluidleitung (20) zur Verlegung zusammen mit elektrischen Mess- (22) und/oder Steuerleitungen (23) ausgebildet ist.

4. Rückstauverschluss nach einem der vorhergehenden Ansprüche,
**dadurch gekennzeichnet, dass**
die Fluidleitung (20) mit einem Außenmantel (24) umhüllt ist, in welchem Mess- (22) und/oder Steuerleitungen (23) angebracht sind.

5. Rückstauverschluss nach einem der vorhergehenden Ansprüche, insbesondere nach einem der Ansprüche 3 oder 4,
**dadurch gekennzeichnet, dass**
eine Verbindung, insbesondere eine feste Verbindung oder eine Steckverbindung, vorgesehen ist über welche die Fluidleitung (20) und die Mess- und/oder Versorgungsleitungen (22/23) mit dem Drucksensor (10) und elektrischen Einrichtungen des Drucksensors (10) und dem Rückstauverschluss verbindbar sind.

6. Rückstauverschluss nach einem der vorhergehenden Ansprüche, insbesondere nach Anspruch 5,
**dadurch gekennzeichnet, dass**
die Steckverbindung eine Steckbuchse umfasst, die direkt am Rückstauverschluss angebracht ist.

7. Rückstauverschluss nach einem der vorhergehenden Ansprüche, insbesondere nach Anspruch 6,
**dadurch gekennzeichnet, dass**
die Steckbuchse am Rückstauverschluss angebracht ist.

## Claims

1. A backwater control valve with a device for measuring a water level of the backwater control valve, wherein the device has a fluid line (20), a fastening housing (30), and a pressure sensor (10) configured for measuring a relative pressure of water (2) in the backwater control valve with respect to an ambient pressure, and a first chamber (11) connected to the waste water pressure in a pressure-tight manner, and a second chamber (12) connected to the ambient air in a pressure-tight manner, between which a differential pressure is measured,
wherein the pressure sensor (10) is directly attached to a removable cover (3) of the backwater control valve, and the fluid line (20) is connected to the second chamber (12) in a pressure-tight manner,
wherein an end of the fluid line (20), which end is open to the environment, is attached in a fastening housing (30) that is attached at an arbitrary height with respect to the backwater control valve.

2. The backwater control valve according to claim 1,
**characterized in that**
a control device for controlling the backwater control valve is attached within the fastening housing (30).

3. The backwater control valve according to any one of the preceding claims, **characterized in that**
the fluid line (20) is configured for being installed together with electrical measuring lines (22) and/or control lines (23).

4. The backwater control valve according to any one of the preceding claims, **characterized in that**
the fluid line (20) is covered by an outer sheath (24), in which the measuring lines (22) and/or control lines (23) are attached.

5. The backwater control valve according to any one of the preceding claims, in particular according to any one of claims 3 or 4,
**characterized in that**
a connection, in particular a fixed connection or a plug connection is provided, via which the fluid line (20) and the measuring and/or control lines (22/23) are connectable to the pressure sensor (10) and electrical devices of the pressure sensor (10) and the backwater control valve.

6. The backwater control valve according to any one of the preceding claims, in particular according to claim 5,
**characterized in that**
the plug connection comprises a plug socket, which is directly attached to the backwater control valve.

7. The backwater control valve according to any one of the preceding claims, in particular according to claim 6,
**characterized in that**
the plug socket is attached to the backwater control valve.

## Revendications

1. Clapet de non-retour avec un dispositif de mesure d'un niveau d'eau du clapet de non-retour, sachant que le dispositif présente une conduite de fluide (20), un boîtier de fixation (30) et un capteur de pression (10) qui est constitué pour mesurer une pression relative d'eau (2) dans le clapet de non-retour par rapport à une pression ambiante et présente une première chambre (11) reliée à la pression des eaux usées de manière étanche à la pression et une deuxième chambre (12) reliée à l'air ambiant de manière étanche à la pression, entre lesquelles une pression différentielle est mesurée,
sachant que le capteur de pression (10) est disposé directement au niveau d'un couvercle (3) amovible du clapet de non-retour et la conduite de fluide (20) est reliée à la deuxième chambre (12) de manière étanche à la pression,
sachant qu'une extrémité de la conduite de fluide (20) ouverte vers le milieu ambiant est disposée dans un boîtier de fixation (30) disposé à une hauteur quelconque par rapport au clapet de non-retour.

2. Clapet de non-retour selon la revendication 1,
**caractérisé en ce que**
un dispositif de commande est disposé dans le boîtier de fixation (30) pour la commande du clapet de non-retour.

3. Clapet de non-retour selon l'une des revendications précédentes, **caractérisé en ce que**
la conduite de fluide (20) est constituée pour être posée conjointement avec des conduites de mesure (22) et/ou de commande (23) électriques.

4. Clapet de non-retour selon l'une des revendications précédentes, **caractérisé en ce que**
la conduite de fluide (20) est entourée d'une enveloppe extérieure (24) dans laquelle les conduites de mesure (22) et/ou de commande (23) sont disposées.

5. Clapet de non-retour selon l'une des revendications précédentes,
en particulier selon l'une des revendications 3 ou 4,
**caractérisé en ce que**
une connexion, en particulier une connexion fixe ou une connexion enfichable, est prévue, via laquelle la conduite de fluide (20) et les conduites de mesure et/ou de commande (22/23) peuvent être reliées au capteur de pression (10) et à des dispositifs électriques du capteur de pression (10) et au clapet de non-retour.

6. Clapet de non-retour selon l'une des revendications précédentes,
en particulier selon la revendication 5,
**caractérisé en ce que**
la connexion enfichable comprend une douille d'enfichage qui est disposée directement au niveau du clapet de non-retour.

7. Clapet de non-retour selon l'une des revendications précédentes,
en particulier selon la revendication 6,
**caractérisé en ce que**
la douille d'enfichage est disposée au niveau du clapet de non-retour.
